# EUROPÄISCHE PATENTSCHRIFT

(11) **EP 2 137 671 B1**
(45) Veröffentlichungstag und Bekanntmachung des Hinweises auf die Patenterteilung: **18.12.2019**
(21) Anmeldenummer: 08718387.7
(22) Anmeldetag: 02.04.2008
(51) Int. Cl.: G06K 9/00

(54) **VORRICHTUNG ZUR AUTHENTIFIKATION EINER PERSON ANHAND MINDESTENS EINES BIOMETRISCHEN PARAMETERS**
APPARATUS FOR AUTHENTICATING A PERSON ON THE BASIS OF AT LEAST ONE BIOMETRIC PARAMETER
DISPOSITIF D'AUTHENTIFICATION D'UNE PERSONNE À L'AIDE D'AU MOINS UN PARAMÈTRE BIOMÉTRIQUE

(30) Priorität: 14.04.2007 DE 102007017713
(43) Veröffentlichungstag der Anmeldung: 30.12.2009
(73) Patentinhaber: Hochschule Bonn-Rhein-Sieg, 53757 Sankt Augustin (DE)
(72) Erfinder: SCHWANEBERG, Oliver, 53757 Sankt Augustin (DE); JUNG, Norbert, 52379 Langerwehe (DE); REINERT, Dietmar, 53757 Sankt Augustin (DE)
(74) Vertreter: dompatent von Kreisler Selting Werner - Partnerschaft von Patent- und Rechtsanwälten mbB
(86) Internationale Anmeldenummer: PCT/EP2008/053918
(87) Internationale Veröffentlichungsnummer: WO 2008/125491

(56) Entgegenhaltungen:
- EP-A- 1 952 302
- DE-A1- 19 958 378
- US-A- 4 500 784
- US-A1- 2003 053 664
- US-B1- 6 292 576
- NIXON K A ET AL: "NOVEL SPECTROSCOPY-BASED TECHNOLOGY FOR BIOMETRIC AND LIVENESS VERIFICATION" BIOMETRIC TECHNOLOGY FOR HUMAN INDENTIFICATION. ORLANDO, FL, APRIL 12 20040412 BELLINGHAM, WA : SPIE, US, Bd. 5004, 12. April 2004 (2004-04-12), Seiten 287-295, XP001509175 ISBN: 978-0-8194-5327-3
- NIXON K A ET AL: "Novel spectroscopy-based technology for biometric and liveness verification" BIOMETRIC TECHNOLOGY FOR HUMAN IDENTIFICATION 12-13 APRIL 2004 ORLANDO, FL, USA, Bd. 5404, Nr. 1, 2004, Seiten 287-295, XP008098861 Proceedings of the SPIE - The International Society for Optical Engineering SPIE-Int. Soc. Opt. Eng USA ISSN: 0277-786X
- TOTH B: "Biometric Liveness Deection" INFORMATION SECURITY BULLETIN, CHI PUBLISHING, Bd. 10, 1. Oktober 2005 (2005-10-01), Seiten 291-298, XP007906384
- CURCIO J A ET AL: "THE NEAR INFRARED ABSORPTION SPECTRUM OF LIQUID WATER" JOURNAL OF THE OPTICAL SOCIETY OF AMERICA, AMERICAN INSTITUTE OF PHYSICS. NEW YORK, US, Bd. 41, 1. Januar 1951 (1951-01-01), Seiten 302-304, XP000885016
- MATSUMOTO T ET AL: "IMPACT OF ARTIFICIAL GUMMY FINGERS ON FINGERPRINT SYSTEMS" PROCEEDINGS OF THE SPIE - THE INTERNATIONAL SOCIETY FOR OPTICAL ENGINEERING, SPIE, BELLINGHAM, VA; US, Bd. 4677, 1. Januar 2002 (2002-01-01), Seiten 275-289, XP009002513
- PAVLIDIS I ET AL: "The imaging issue in an automatic face/disguise detection system}", INTERNET CITATION, 1 January 2000 (2000-01-01), pages 1-10, XP002596069, ISBN: 978-0-7695-0640-1 Retrieved from the Internet: URL:http://ieeexplore.ieee.org/stamp/stamp .jsp?tp=&arnumber=855246 [retrieved on 2010-06-09]
- DOWDALL J ET AL: "Face detection in the near-IR spectrum", IMAGE AND VISION COMPUTING, ELSEVIER, GUILDFORD, GB, vol. 21, 1 January 2003 (2003-01-01), pages 565-578, XP002421687, ISSN: 0262-8856, DOI: 10.1016/S0262-8856(03)00055-6

## Beschreibung

Die Erfindung betrifft eine Vorrichtung zur Authentifikation einer Person anhand mindestens eines biometrischen Parameters, wobei es sich bei dem Parameter insbesondere um den Fingerabdruck der Person handelt.

Es ist bekannt, beispielsweise den Zugang zu sicherheitsrelevanten Bereichen oder die Initiierung sicherheitsrelevanter Transaktionen (beispielsweise Bankengeschäfte) durch Authentifikationsvorrichtungen und -prozesse abzusichern. Hierbei muss sich die Person, die Zugang zu dem sicherheitsrelevanten Bereich wünscht oder sicherheitsrelevante Transaktionen durchführen will, unter anderem anhand von biometrischen Parametern authentifizieren. Insbesondere wird dabei der Fingerabdruck der Person überprüft und mit den abgespeicherten Fingerabdrücken sämtlicher Personen verglichen, die erlaubter maßen Zugang zum sicherheitsrelevanten Bereich bzw. Zugriff auf die sicherheitsrelevanten Transaktionen haben.

Fingerabdruck-Scanner sind im Stand der Technik grundsätzlich bekannt. Diese arbeiten beispielsweise mit Kameras, die den Fingerabdruck aufnehmen und alsdann einen Vergleich mit abgelegten Fingerabdrücken vornehmen.

Derartige Fingerabdruck-Scanner könnten durch "künstliche" Fingerabdrücke manipuliert werden. Daher sind im Stand der Technik Fingerabdruck-Scanner bekannt, bei denen zusätzlich überprüft wird, ob tatsächlich ein "echter" Finger auf dem Erfassungsbereich aufgelegt ist. Diese bekannten Systeme messen beispielsweise die Temperatur, den Puls, den Blutsauerstoffgehalt, den Blutdruck, den elektrischen Hautwiderstand oder das Gewebe unter der Haut mit Hilfe von Ultraschall.

Sämtliche dieser Messmethoden lassen sich durch Verwendung dünner Silikon- oder Gelantine-Fingerabdrücke, die über den Finger einer den Fingerabdruck-Scanner manipulierenden Person gelegt werden können, oder durch Temperierung bzw. Befeuchtung eines Kunstfingers umgehen.

Aus DE 199 58 378 A1 ist eine Vorrichtung zur Personenidentifikation bekannt. Diese Vorrichtung weist einen Biometrie-Detektor zur Detektion eines biometrischen Parameters der Person auf. Bei diesem Detektor wird ferner anhand einer optischen Abtastung der Pulsfrequenz lebendes biologisches Gewebe erkannt.

In WO 01/59692 A1 ist ein Fingerabdrucksensor mit automatischer Aktivierung beschrieben. Zur Energieeinsparung kann der Fingerabdrucksensor zwischen Sleep-Modus und voller Funktion umgeschaltet werden. Solange kein Finger auf dem Sensor aufgelegt ist, bleibt der Fingerabdrucksensor in dem Sleep-Modus, in dem der Stromverbrauch sehr gering ist.

In NIXON, Kristin A. et al.: "Novel Spectroscopy-Based Technology for Biometric and Liveness Verification"; Biometric Technology for Human Identification; ORLANDO, FL, 12-13 April 2004, erschienen in: Proceedings of the SPIE, Bd. 5404, SPIE, BELLINGHAM, WA, 2004, Seiten 287-295, XP001509175 ISBN: 978-0-8194-5327-3, wird ein recht aufwändiger Sensor zur Analyse der Spektraleigenschaften der Haut im Bereich von 395 nm bis 940 nm (Seite 291) beschrieben. Der Bereich wird von 32 LEDs mit 16 unterschiedlichen Wellenlängen abgedeckt (siehe unter Conclusion auf Seite 294). Dabei geht es um eine sehr genaue Erkennung der einzelnen Stoffe im menschlichen Gewebe. So wird z.B. der Sauerstoffgehalt im Hämoglobin ermittelt (siehe Abb. 3). Der Sensor betrachtet also geringfügige Veränderungen im Wellenbereich unter 1000 nm. Die verwendeten Algorithmen und die Signalauswertung werden nicht behandelt.

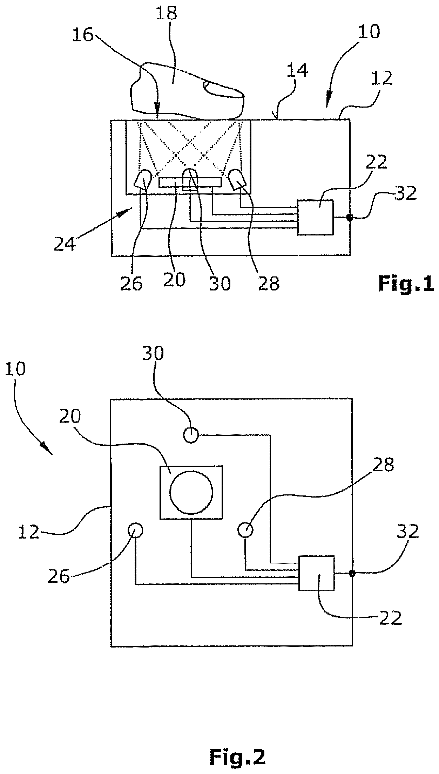

US-A-2003/0053664 offenbart ein System, mit dem eine Person mit Hilfe der Gesichtserkennung authentifiziert wird (Absätze 5 und 6). Das System umfasst einen Biometrie-Detektor in Form eines Infrarot-Kamerasystems (Fig. 1) und eine Signalauswerteeinheit in Form eines Computersystems mit entsprechender Erkennungssoftware. Weiterhin umfasst das System einen mit der Signalauswerteeinheit verbundenen Hautdetektor. Der Hautdetektor umfasst eine Strahlungseinheit (Fig. 4) und eine Empfangseinheit. Die Strahlungseinheit ist dazu eingerichtet, Licht in zwei Wellenlängenbändern von 900 nm bis 1400 nm und 1400nm bis 1700 nm abzugeben. Aus den empfangenen Lichtpegeln der beiden Wellenlängenbänder wird eine gewichtete Differenz gebildet (Absatz 96) und einer Schwellwertbildung unterzogen (Absatz 125). Dadurch wird lebende menschliche Haut erkannt und vom Hintergrund unterschieden (Absätze 126 und Fig. 22c).

Aufgabe der Erfindung ist es, eine Vorrichtung zur Authentifikation einer Person anhand mindestens eines biometrischen Parameters, insbesondere anhand eines Fingerabdrucks zu schaffen, die vor Manipulationen durch insbesondere künstliches Gewebe besser geschützt ist.

Zur Lösung dieser Aufgabe wird mit der Erfindung eine Vorrichtung zur Authentifikation einer Person anhand mindestens eines biometrischen Parameters, insbesondere anhand eines Fingerabdrucks, vorgeschlagen, wobei die Vorrichtung mit den Merkmalen des Anspruchs 1 versehen ist.

Die Unteransprüche betreffen einzelne Ausgestaltungsmöglichkeiten der Erfindung.

Gemäß der Erfindung wird bei der Vorrichtung zur Authentifikation einer Person anhand mindestens eines biometrischen Parameters, insbesondere anhand eines Fingerabdrucks, berührungslos detektiert, ob lebende menschliche Haut existent ist. Dies erfolgt gemäß einem ersten Ausführungsbeispiel der Erfindung mit Hilfe eines Detektors, der eine Gruppe von mindestens drei Halbleiterdioden aufweist. Bei mindestens zwei der Halbleiterdioden handelt es sich um Sendedioden, während mindestens eine der Halbleiterdioden als Empfangsdiode ausgebildet ist. Die Sendedioden senden Strahlung bei zwei unterschiedlichen Sendewellenlängen von 950 nm und 1050 nm, oder 950 nm und 1200 nm, oder 1050 nm und 1200 nm, oder 1050 nm und 1300 nm aus, und zwar in Richtung auf den Erfassungsbereich. Die mindestens eine Empfangsdiode empfängt die aus dem Erfassungsbereich reflektierte Strahlung der Sendedioden, d.h. die Remissionen. Dies erfolgt zweckmäßigerweise sukzessiv, d.h. die Sendedioden werden sukzessiv angesteuert, so dass das von der Empfangsdiode empfangene Signal der reflektierten Strahlungen und insbesondere deren Intensitäten jeder der Sendedioden zugeordnet werden kann. Die Empfangsdiode gibt ein Signal aus, das die Intensität der jeweiligen reflektierten Strahlung repräsentiert.

In einer Signalauswerteeinheit werden die Empfangssignale der Empfangsdiode bzw. der Empfangsdioden ausgewertet, wobei die Intensitäten der reflektierten Strahlungen der Sendedioden in der Signalauswerteeinheit erfindungsgemäß in Relation zueinander gesetzt werden (Quotienten- oder Differenzbildung). Diese (Remissions-)Intensitäten weisen unterschiedliche Werte auf, je nachdem, ob die Strahlungen von lebender, d.h. vitaler stoffwechselaktiver oder nicht-lebender menschlicher Haut oder von "künstlicher" Haut (z.B. Silikon- oder Gelantine-Fingerüberzug bzw. -abdruck) reflektiert wird. Dadurch kann zuverlässig ermittelt werden, ob sich im von dem Detektor berührungslos erfassten Erfassungsbereich des Biometrie-Detektors menschliche Haut, d.h. im Falle eines Fingerabdruckscanners ein menschlicher "lebender" Finger befindet. Erst wenn dies eindeutig detektiert ist, wird von der erfindungsgemäßen Vorrichtung bei positiver Überprüfung der biometrischen Parameter ein Authentifikationssignal ausgegeben.

Der erfindungsgemäß vorgesehene berührungslose Haut-Detektor arbeitet bei zwei im nahen Infrarotbereich liegenden Wellenlängen, nämlich von 950 nm und 1050 nm, oder 950 nm und 1200 nm, oder 1050 nm und 1200 nm, oder 1050 nm und 1300 nm. Untersuchungen an menschlicher Haut haben gezeigt, dass sich diese Wellenlängen bei verschiedenen Hautfarben und Beleuchtungssituationen sehr gut eignen, um lebende Haut insbesondere von nicht-lebender Haut und Hautnachbildungen zuverlässig zu unterscheiden. Ein in dem oben beschriebenen Wellenlängenbereich arbeitender Detektor ist darüber hinaus kaum elektrischen und thermischen Einflüssen, Feuchtigkeitseinflüssen oder Veränderungen der Beleuchtungssituation ausgesetzt. Auch die Abhängigkeit von Hauttönungen ist vernachlässigbar.

Sämtliche Sendedioden strahlen im Nah-Infrarotbereich ab.

Das Remissionsspektrum lebender menschlicher Haut unterscheidet sich bei den erfindungsgemäß ausgewählten Wellenlängen deutlich von dem Remissionsspektrum z.B. eines Kunstfingers bzw. nicht-lebender menschlicher Haut, so dass durch die Untersuchung (z.B. Quotienten- oder Differenzbildung) der Remissionsintensitäten an mindestens zwei Stellen des Nahinfrarot-Wellenlängenbereichs eine eindeutige Unterscheidung zwischen lebender menschlicher Haut und nicht-lebender menschlicher Haut bzw. Hautnachbildungen gegeben ist.

Erfindungsgemäß wird also bei mindestens zwei unterschiedlichen Sendewellenlängen vorzugsweise schmalbandig (höchstens 50 nm bis 200 nm) Strahlung ausgesendet, die durch eine vorzugsweise breitbandige Empfangsdiode bzw. Empfangsdioden nach Reflektion im Erfassungsbereich empfangen wird. Am Markt preiswert erhältlich sind diverse Halbleiterdioden (Leuchtdioden oder Laserdioden), die schmalbandig bei den hier interessierenden Wellenlängen abstrahlen. Damit kann man zur Realisierung des Detektors auf bereits am Markt angebotene, preisgünstige Komponenten zurückgreifen, was die Gestehungskosten des erfindungsgemäß vorgesehenen Detektors verringert.

Auch die Auswertung der Signale des Detektors kann denkbar schnell erfolgen. Es werden nämlich lediglich die Integrale über die aus dem Erfassungsbereich empfangene Remissionsstrahlung ausgewertet. Diese Signale liefert die Empfangsdiode, weshalb diese Signale unmittelbar und schnell vorliegen und demzufolge auch unmittelbar ausgewertet werden können.

Es ist zweckmäßig, wenn mehrere Gruppen von Halbleiterdioden, jeweils bestehend aus mindestens zwei Sendedioden und mindestens einer gemeinsamen Empfangsdiode, längs einer Zeile bzw. Linie oder einigen aufeinander folgenden Zeilen bzw. Linien angeordnet werden.

Die für die Detektion auszuwählenden Wellenlängen im erfindungsgemäß vorgeschlagenen Nah-Infrarotbereich werden so gewählt, dass sich die Remissions-Intensitäten bei Reflektion an lebendem menschlichen Gewebe von denjenigen bei Reflektion an anderen Materialien deutlich unterscheiden. Sendedioden, die bei diesen bevorzugten Wellenlängen (schmalbandig) senden, existieren, wie oben bereits erwähnt, und sind im Regelfall kostengünstig erhältlich. Erfindungsgemäß wird ein Detektor eingesetzt, der vorzugsweise über Sende-Halbleiterdioden und eine Empfangs-Halbleiterdiode verfügt, wobei die Wellenlängen der Sendedioden gemäß Erfindung bei 950 nm und 1050 nm oder 950 nm und 1200 nm oder 1050 nm und 1200 nm oder 1050 nm und 1300 nm liegen.

Ein gewisser Nachteil bei der Verwendung handelsüblicher halbleitender Sendedioden besteht darin, dass sie ihre Strahlung nur mit relativ geringer Intensität aussenden. Unter Berücksichtigung des Umgebungslichts und der Umgebungseinflüsse kann daher der Fall eintreten, dass die von der Empfangsdiode empfangene Strahlung zu schwach ist, um hinreichend zuverlässige Ergebnisse zu erzielen. Daher ist bei einer vorteilhaften Weiterbildung der Erfindung vorgesehen, dass sich die bei der gleichen Wellenlänge sendenden Sendedioden zweier benachbarter Gruppen überlappen, d.h. diese beiden Sendedioden einen gemeinsamen Teil des Erfassungsbereichs ausleuchten, so dass nun wiederum die reflektierte Strahlung ausreichend intensiv ist, um zuverlässig von der Empfangsdiode bzw. den Empfangsdioden empfangen zu werden. Alternativ oder zusätzlich können die Sendedioden auch gepulst werden, um kurzzeitig eine erhöhte Strahlungsenergie abgeben zu können, ohne dass sie oberhalb ihrer maximal zulässigen Verlustleistung betrieben werden. Auch ist es optional möglich, zur Signalverbesserung vor den Sende- und/oder den Empfangsdioden optische Elemente wie z.B. Linsen anzuordnen.

In vorteilhafter Weiterbildung der Erfindung ist ferner vorgesehen, dass in der Signalauswerteeinheit das von der Empfangsdiode bzw. den Empfangsdioden empfangene Umgebungslicht kompensierbar ist, so dass als reines Nutzsignal das aus dem Erfassungsbereich reflektierte Licht der Sendedioden verbleibt.

Vorteilhaft ist es ferner, wenn die schmalbandig aussendenden Sendedioden eine spektrale Bandbreite von maximal bis zu 200 nm aufweisen, wobei die spektrale Bandbreite definiert ist als derjenige Bereich, innerhalb dessen die Sendediode mit mindestens 50 % der Maximalintensität aussendet.

Es ist ferner möglich, einen Detektor zur Erkennung von lebender menschlicher Haut oder allgemein, lebendem menschlichem Gewebe (z.B. Irisblende) aufzubauen, welcher mit mehr als zwei Wellenlängen arbeitet. Als mögliche Konstellation für ein System mit z.B. drei Wellenlängen ist die Kombination der Wellenlängen 1050 nm, 1300 nm und 1450 nm interessant. Bei dieser Zusammenstellung werden die beiden am stärksten ausgeprägten Abfälle der Remissionsintensität bei lebendem menschlichem Gewebe, wie z.B. Haut im Nahinfrarotbereich, berücksichtigt. Des Weiteren ist anzumerken, dass diese Konstellation alle Wellenlängen der beiden bestbewerteten Wellenlängenpaare vereinigt. Es sei allerdings angemerkt, dass die typische Remissionsintensität lebender menschlicher Haut bei 1450 nm sehr schwach ist. Eine mögliche Lösung wäre die automatische Umschaltung auf den Betrieb mit zwei Wellenlängen, wenn das Signal der 1450 nm-Messung zu schwach wäre. Somit würde der Detektor also in einigen Fällen wie ein Detektor mit zwei Wellenlängen arbeiten.

An dieser Stelle sei hervorgehoben, dass die Erfindung auf die Realisierung der Sende- und Empfangseinheiten des Detektors durch Dioden nicht beschränkt ist. Ganz allgemein umfasst der Detektor eine Sendeeinheit und eine Empfangseinheit, wobei die Sendeeinheit bei zwei unterschiedlichen Wellenlängen abstrahlt. So ist es beispielsweise möglich, je nach Lage der Wellenlängen diese durch beispielsweise eine einzige Halbleiterdiode auszusenden. Auch wäre es denkbar, die schmalbandigen Detektionsstrahlungen durch Filterung der Strahlung einer breitbandigeren Strahlungsquelle zu bilden. Die vorstehend und nachfolgend gemachten Ausführungen über den Detektor sind also dahingehend zu verstehen, dass dieser auf die Anzahl der Sendedioden nicht beschränkt ist. Vielmehr kann eine einzige Sendequelle verwendet werden, die schmalbandig bei den interessierenden Wellenlängen abstrahlt.

Ferner sei an dieser Stelle hervorgehoben, dass sich die Bildung einer Relation unter den empfangenen Strahlungsintensitäten bei den verschiedenen Wellenlängen auf eine Differenz- oder eine Quotientenbildung der jeweiligen Intensitätswerte bezieht. Wie die gemessenen Intensitätswerte der reflektierten Strahlungen in Relation zueinander gesetzt werden, ist in erster Linie applikationsabhängig. Für die Erkennung lebender, d.h. noch durchbluteter oder stoffwechselaktiver menschlicher Haut als eine (weitere) Verifikation dafür, dass ein von einem Biometrie-Detektor erfasster biometrischer Parameter als von einer existenten Person stammend erkannt wird, hat es sich als zweckmäßig herausgestellt, wenn der Quotient aus den mindestens zwei Remissions-Intensitätswerten gebildet wird, wobei es hierbei grundsätzlich unerheblich ist, welche Intensitätswerte als Divisor oder Dividend herangezogen werden.

Schließlich sei erwähnt, dass die Erfindung gemäß Anspruch 1 auf die Verwendung von Halbleiterbauelementen als Strahlungs- bzw. Sendeeinheit und Empfangseinheit nicht beschränkt ist.

Entscheidend nach der Erfindung in ihrer allgemeinen Form ist, dass selektiv die Intensitäten der Remissionen bei mindestens zwei der erfindungsgemäß vorgesehenen Wellenlängen von 950 nm und 1050 nm, oder 950 nm und 1200 nm, oder 1050 nm und 1200 nm, oder 1050 nm und 1300 nm ermittelt und untersucht werden, da anhand dieser Remissions-Intensitäten zuverlässig auf lebende Haut bzw. nicht-lebende Haut oder Hautnachbildungen untersucht werden kann. Dabei ist es möglich, dass die Sendeeinheit breitbandig abstrahlt und die Empfangseinheit schmalbandig bei den mindestens zwei Wellenlängen empfängt oder aber sowohl die Sende- als auch die Empfangseinheit breitbandig ausgelegt sind, durch eine wellenlängenselektive Filterung jedoch die erforderliche Selektion auf die mindestens zwei Wellenlängen erfolgt.

Dabei gilt, dass die Strahlungseinheit Strahlung bei zwei Wellenlängen von 950 nm und 1050 nm oder 950 nm und 1200 nm oder 1050 nm und 1200 nm oder 1050 nm und 1300 nm abgibt.

Die Erfindung ist nicht darauf beschränkt, dass ausschließlich bei den zwei Wellenlängen gemäß den erfindungsgemäßen Alternativen gearbeitet wird. Es können mehrere erfindungsgemäße Wellenlängenpaare benutzt werden oder aber eine oder mehrere Wellenlängenpaare nach der Erfindung zusammen mit Strahlung verwendet werden, deren Wellenlänge/Wellenlängen außerhalb der erfindungsgemäßen Wellenlängen liegen.

Bei einer vorteilhaften Ausgestaltung der Erfindung ist ferner vorgesehen, dass mehrere Gruppen von Strahlungs- und Empfangseinheiten nebeneinander angeordnet sind, wobei die Strahlungseinheiten zweier benachbarter Gruppen derart angeordnet sind, dass die Strahlung mit der jeweils gleichen Wellenlänge der einen Strahlungseinheit nach Reflektion aus dem Erfassungsbereichs von der Empfangseinheit der jeweils benachbarten Gruppe erfassbar ist.

Die Strahlungseinheit sendet Strahlung mit einer spektralen Bandbreite von bis zu 200 nm, vorzugsweise unterhalb von 50 nm.

Die Strahlungseinheit kann mehrere einzelne Strahlungsquellen aufweisen, die bei den interessierenden Wellenlängen schmalbandig abstrahlen. Bei diesen Strahlungsquellen kann es sich um LEDs, Laserdioden, Lumineszenz-Strahler oder Gasentladungslampen, insbesondere Xenon-Lampen, handeln.

Es ist aber auch möglich, dass die Strahlungseinheit lediglich eine Strahlungsquelle aufweist, die Strahlung schmalbandig und insbesondere als Linienspektrum bei unterschiedlichen Wellenlängen abgibt. Bei einer derartigen Strahlungsquelle handelt es sich zweckmäßigerweise um ein Lumineszenzelement, das ein Linienspektrum mit einer Kombination der erforderlichen mindestens zwei unterschiedlichen Wellenlängen abstrahlt.

Als Empfangseinheit eignet sich beispielsweise eine Photodiode, ein Phototransistor, ein Photomultiplier oder ein CDS-Element.

Zweckmäßigerweise lässt sich die Wellenlängenselektion auch durch eine Filtereinheit realisieren, die zwischen der Sendeeinheit und dem Erfassungsbereich und/oder zwischen dem Erfassungsbereich und der Empfangseinheit angeordnet ist.

Zweckmäßigerweise ist mindestens ein refraktives oder reflektives optisches Element im Strahlengang zwischen der Strahlungseinheit und der Empfangseinheit angeordnet.

Die Erfindung wird nachfolgend anhand eines Ausführungsbeispiels unter Bezugnahme der Zeichnung näher erläutert. Im Einzelnen zeigen dabei:
- Fig. 1: die wesentlichen Elemente eines Fingerabdruck-Scanners mit einem berührungslos arbeitenden Haut-Detektor gemäß einem Ausführungsbeispiel der Erfindung und
- Fig. 2: der Fingerabdruck-Scanner mit seinen wesentlichen Komponenten in Draufsicht.

Die Erfindung wird nachfolgend anhand eines Fingerabdruck-Scanners als Beispiel für einen Biometrie-Detektor, der die Detektion anhand der Untersuchung menschlichen Gewebes durchführt, beschrieben.

Die Vorrichtung 10 zur Authentifikation einer Person anhand ihres Fingerabdrucks umfasst ein Gehäuse 12, auf dessen Oberseite 14 bzw. Außenseite ein Erfassungsbereich 16 definiert ist, innerhalb dessen eine sich authentifizierende Person einen ihrer Finger 18 auflegt. Der Fingerabdruck dieses Fingers 18 wird durch einen Fingerabdruck-Detektor 20 erfasst, der in diesem Ausführungsbeispiel als Kamera ausgebildet ist, wobei der Einfachheit halber in den Figuren das optische System der Kamera nicht dargestellt ist. Das von dem Detektor 20 aufgenommene Bild bzw. allgemein die von dem Detektor 20 erfassten Daten werden einer Signalauswerteeinheit 22 zugeführt, die Bestandteil des Gehäuses 12, aber auch außerhalb des Gehäuses angeordnet sein kann. In der Signalauswerteeinheit 22 werden die erfassten Daten mit den Fingerabdruckdaten von Personen verglichen, die als berechtigt gelten, einen Bereich bzw. eine Transaktion, für die eine Authentifikation erforderlich ist, zu betreten bzw. durchzuführen.

Zusätzlich zu dem Fingerabdruck-Detektor 20 weist die Vorrichtung 10 einen Haut-Detektor 24 auf, der berührungslos erkennt, ob es sich bei der Oberfläche, die mit dem Detektor 20 erfasst wird, um lebende, d.h. stoffwechselaktive menschliche Haut handelt.

Der Haut-Detektor 24 umfasst in diesem Ausführungsbeispiel zwei Sendedioden 26,28 und eine Empfangsdiode 30. Bei den beiden Sendedioden 26,28 handelt es sich entweder um Laser- oder Leuchtdioden. Die Sendedioden senden elektromagnetische Strahlung schmalbandig bei unterschiedlichen Wellenlängen innerhalb des nahen Infrarotbereichs zwischen 900 nm und 1500 nm aus. Die Empfangsdiode 30 ist breitbandig ausgelegt. Die drei Dioden des Detektors 24 sind elektrisch mit der Signalauswerteeinheit 22 verbunden, die die Signale der Empfangsdiode 30 auswertet und darüber hinaus die Sendedioden 26,28 ansteuert. In diesem Ausführungsbeispiel weist der Haut-Detektor 24 eine Gruppe der zuvor genannten drei Dioden auf. Es ist aber auch möglich, dass der Detektor mehrere derartige Gruppen von Dioden aufweist.

Bei dem hier beschriebenen Haut-Detektor 24 sendet die Sendediode 26 schmalbandig, d.h. in einem Bereich von höchstens 200 nm, um eine Wellenlänge von 950 nm, während die zweite Sendediode 28 ebenfalls schmalbandig bei einer anderen erfindungsgemäßen Wellenlänge sendet. Die von den Sendedioden 26,28 aufeinanderfolgend ausgesendete Strahlung trifft innerhalb des Erfassungsbereichs 16 des Gehäuses 12 auf, aus dem von dem aufgelegten Finger 18 reflektierte Strahlung von der Empfangsdiode 30 empfangen wird. Sofern sich im Erfassungsbereich 16 ein menschlicher Finger 18 mit vitaler, d.h. stoffwechselaktiver Haut, befindet, so ergibt sich eine charakteristische Intensität der Remission bei den beiden Sendewellenlängen. Die Empfangsdiode 30 erfasst die Intensität der reflektierten Strahlungen, wobei in der Signalauswerteeinheit 22 der Quotient der Intensitäten errechnet wird. Dieser Quotient unterscheidet sich deutlich von einem Remissions-Quotienten, der sich durch die Intensitätswerte der Remissionen bei Reflektion der Sendestrahlungen durch andere Gegenstände als lebende menschliche Finger einstellt. Auf diese Weise kann eine Unterscheidung zwischen menschlicher Haut und anderen Gegenständen und insbesondere zwischen lebender menschlicher Haut und nicht-lebender Haut getroffen werden. Nur dann, wenn der Detektor 24 lebende menschliche Haut erkennt, kann die Signalauswerteeinheit 22 bei 32 ein Authentifikationssignal ausgeben. Ob dieses Authentifikationssignal bei Detektion lebender menschlicher Haut ausgegeben wird, hängt davon ab, ob in der Vorrichtung 10 die Daten des erfassten Fingerabdrucks als Fingerabdruck einer berechtigten Person abgelegt sind, der eigentliche Authentifikationsvorgang also die Berechtigung einer Person bestätigt.

Wie bereits oben erwähnt, kann es zweckmäßig sein, mehrere Gruppen von Sende- und Empfangsdioden zu verwenden. Dies ist dann von Vorteil, wenn, was bei den gegenwärtig im Handel erhältlichen Dioden der Fall ist, diese bei den ausgewählten Wellenlängen nur recht schwach senden. Die Anordnung der Dioden mehrerer Diodengruppen wird dabei derart gewählt, dass die Emissionskegel der beiden benachbarten, bei gleicher Wellenlänge, sendenden Sendedioden sich überlappen, wenn sie auf den Erfassungsbereich bzw. den Finger auftreffen, so dass die Empfangsdioden jeweils die Remission mehrerer bei gleichen Wellenlängen sendender Sendedioden erfassen. Dadurch ergibt sich eine erhöhte Strahlungsintensität, so dass auf diese Weise die möglicherweise geringen Strahlungsintensitäten der Sendedioden kompensiert werden können.

## Patentansprüche

1. Vorrichtung zur Authentifikation einer Person anhand mindestens eines biometrischen Parameters, insbesondere anhand eines Fingerabdrucks, mit
- einem Biometrie-Detektor (20) zur Detektion eines biometrischen Parameters und
- einer mit dem Biometrie-Detektor (20) verbundenen Signalauswerteeinheit (22) zur Auswertung der Intensität der von der Empfangseinheit (30) empfangenen reflektierten Strahlungen der Strahlungseinheit (26,28),
**gekennzeichnet durch**
- einen Haut-Detektor (24) zur berührungslosen Erkennung lebender menschlicher Haut innerhalb eines Erfassungsbereichs,
- wobei der Haut-Detektor (24) mit der Signalauswerteeinheit (22) verbunden ist und mindestens eine Gruppe aus mindestens einer Strahlungseinheit (26,28) und mindestens einer Empfangseinheit (30) aufweist,
- wobei die mindestens eine Strahlungseinheit (26,28) in Richtung auf den Erfassungsbereich Strahlung bei zwei Wellenlängen von 950 nm und 1050 nm, oder 950 nm und 1200 nm, oder 1050 nm und 1200 nm, oder 1050 nm und 1300 nm abgibt und die mindestens eine Empfangseinheit (30) aus dem Erfassungsbereich reflektierte Strahlung empfängt,
- wobei die Signalauswerteeinheit (22) anhand des Quotienten oder der Differenz der Intensitäten der von der Empfangseinheit (30) empfangenen Strahlungen bei den zwei unterschiedlichen Wellenlängen lebende Haut von Hautnachbildungen unterscheidet und damit ermittelt, ob der Haut-Detektor (24) lebende menschliche Haut erkennt, und
- wobei die Ausgabe eines Authentifikationssignals die Detektion lebender menschlicher Haut und die Detektion eines zur Person gehörenden biometrischen Parameters voraussetzt.

2. Vorrichtung nach Anspruch 1, **dadurch gekennzeichnet, dass** die mindestens eine Strahlungseinheit (26,28) Strahlung mit einer spektralen Bandbreite von bis zu 200 nm sendet.

3. Vorrichtung nach Anspruch 2, **dadurch gekennzeichnet, dass** die mindestens eine Strahlungseinheit (26,28) Strahlung mit einer spektralen Bandbreite von kleiner als 50 nm sendet.

4. Vorrichtung nach einem der Ansprüche 1 bis 3, **dadurch gekennzeichnet, dass** die mindestens eine Strahlungseinheit (26,28) mindestens zwei Strahlungsquellen aufweist, bei denen es sich z.B. um LEDs, Laserdioden, Lumineszenz-Strahler oder Gasentladungslampen, insbesondere Xenon-Lampen, handelt.

5. Vorrichtung nach einem der Ansprüche 1 bis 3, **dadurch gekennzeichnet, dass** die mindestens eine Strahlungseinheit (26,28) eine Strahlung bei den beiden Wellenlängen abgebende Strahlungsquelle aufweist, bei der es sich z.B. um ein Lumineszenzelement handelt, das ein Linienspektrum mit einer Kombination der zwei unterschiedlichen Wellenlängen abstrahlt.

6. Vorrichtung nach einem der Ansprüche 1 bis 5, **dadurch gekennzeichnet, dass** die Empfangseinheit (30) z.B. eine Photodiode, ein Phototransistor, ein Photomultiplier oder ein CDS-Element ist.

7. Vorrichtung nach einem der Ansprüche 1 bis 6, **dadurch gekennzeichnet, dass** eine wellenlängenselektive Filtereinheit vorgesehen ist, die zwischen der mindestens einen Strahlungseinheit (26,28) und dem Erfassungsbereich und/oder zwischen dem Erfassungsbereich und der Empfangseinheit (30) angeordnet ist.

8. Vorrichtung nach einem der Ansprüche 1 bis 7, **dadurch gekennzeichnet, dass** mindestens ein refraktives oder reflektives optisches Element im Strahlengang zwischen der Strahlungseinheit (26,28) und der Empfangseinheit (30) angeordnet ist.

## Claims

1. An apparatus for authenticating a person by means of at least one biometric parameter, particularly by means of a fingerprint, comprising
- a biometry detector (20) for detection of a biometric parameter, and
- a signal evaluation unit (22) connected to the biometry detector (20), for evaluation of the intensity of the reflected radiations of the radiation unit (26,28) as received by the receiving unit (30),
**characterized by**
- a skin detector (24) for contactless detection of living human skin within a detection area,
- wherein said skin detector (24) being connected to the signal evaluation unit (22) and comprising at least one group of at least one radiation unit (26,28) and at least one receiving unit (30),
- wherein said at least one radiation unit (26,28) emitting radiation towards the detection area at at least two wavelengths of 950 nm and 1050 nm, or 950 nm and 1200 nm, or 1050 nm and 1200 nm, or 1050 nm and 1300 nm, and said at least one receiving unit (30) receiving radiation reflected from the detection area,
- wherein said signal evaluation unit (22) distinguishing living skin from skin replications by means of the quotient or the difference of said intensities of the radiations received by the receiving unit (30) at the two different wavelengths, and thus determining whether said skin detector (24) is detecting living human skin, and
- wherein the output of an authentication signal presumes the detection of living human skin and the detection of a biometric parameter belonging to the person.

2. The apparatus according to claim 1, **characterized in that** the at least one radiation unit (26,28) emits radiation of a spectral bandwidth of up to 200 nm.

3. The apparatus according to claim 2, **characterized in that** the at least one radiation unit (26,28) emits radiation of a spectral bandwidth of below 50 nm.

4. The apparatus according to any one of claims 1 to 3, **characterized in that** the at least one radiation unit (26,28) comprises at least two radiation sources, said radiation sources being e.g. LEDs, laser diodes, luminescence radiators or gas discharge lamps, particularly xenon lamps.

5. The apparatus according to any one of claims 1 to 3, **characterized in that** the at least one radiation unit (26,28) comprises a radiation source emitting radiation at the two wavelengths, said radiation source being e.g. a luminescence element radiating a line spectrum with a combination of the two different wavelengths.

6. The apparatus according to any one of claims 1 to 5, **characterized in that** the receiving unit (30) is e.g. a photodiode, a phototransistor, a photomultiplier or a CDS element.

7. The apparatus according to any one of claims 1 to 6, **characterized in that** a wavelength-selective filter unit is provided which is arranged between the at least one radiation unit (26,28) and the detection area and/or between the detection area and the receiving unit (30).

8. The apparatus according to any one of claims 1 to 7, **characterized in that** at least one refractive or reflective optical element is arranged in the path of rays between the radiation unit (26,28) and the receiving unit (30).

## Revendications

1. Dispositif d'authentification de personne à l'aide d'au moins un paramètre biométrique, en particulier à l'aide d'une empreinte digitale, doté
- d'un détecteur biométrique (20) pour détection d'un paramètre biométrique, et
- d'une unité d'évaluation du signal (22) reliée au détecteur biométrique (20) pour évaluer l'intensité du rayonnement réfléchi de l'unité de rayonnement (26, 28) reçu par l'unité réceptrice (30),
**caractérisé par**
- un détecteur de peau (24) pour reconnaissance sans contact de la peau humaine vivante à l'intérieur d'une zone de détection,
- dans lequel le détecteur de peau (24) est relié à l'unité d'évaluation du signal (22) et comporte au moins un groupe d'au moins une unité de rayonnement (26, 28) et d'au moins une unité réceptrice (30),
- dans lequel l'au moins une unité de rayonnement (26, 28) émet dans la direction de la zone de détection un rayonnement à deux longueurs d'onde, de 950 nm et 1050 nm, ou de 950 nm et 1200 nm, ou de 1050 nm et 1200 nm, ou de 1050 nm et 1300 nm et l'au moins une unité réceptrice (30) reçoit le rayonnement réfléchi depuis la zone de détection,
- dans lequel l'unité d'évaluation du signal (22) différencie la peau vivante des reproductions de peau à l'aide du quotient ou de la différence des intensités des rayonnements reçus par l'unité réceptrice (30) pour les deux longueurs d'onde différentes, et détermine ainsi si le détecteur de peau (24) reconnaît de la peau humaine vivante, et
- dans lequel la sortie d'un signal d'authentification exige la détection de peau humaine vivante et la détection d'un paramètre biométrique appartenant à la personne.

2. Dispositif selon la revendication 1, **caractérisé en ce que** l'au moins une unité de rayonnement (26, 28) émet un rayonnement avec une largeur de bande spectrale jusqu'à 200 nm.

3. Dispositif selon la revendication 2, **caractérisé en ce que** l'au moins une unité de rayonnement (26, 28) émet un rayonnement avec une largeur de bande spectrale inférieure à 50 nm.

4. Dispositif selon l'une des revendications 1 à 3, **caractérisé en ce que** l'au moins une unité de rayonnement (26, 28) comporte au moins deux sources de rayonnement, lesquelles peuvent être par exemple des LED, des diodes lasers, des émetteurs de luminescence ou des lampes à décharge gazeuse, en particulier des lampes au xénon.

5. Dispositif selon l'une des revendications 1 à 3, **caractérisé en ce que** l'au moins une unité de rayonnement (26, 28) comporte une source de rayonnement émettant un rayonnement aux deux longueurs d'onde, pouvant être par exemple un élément luminescent rayonnant un spectre de lignes avec une combinaison des deux longueurs d'onde différentes.

6. Dispositif selon l'une des revendications 1 à 5, **caractérisé en ce que** l'unité réceptrice (30) est par exemple une photodiode, un phototransistor, un photomultiplicateur ou un élément CDS.

7. Dispositif selon l'une des revendications 1 à 6, **caractérisé en ce qu'**une unité de filtre sélective en longueur d'onde est prévue, laquelle est agencée entre l'au moins une unité de rayonnement (26, 28) et la zone de détection et/ou entre la zone de détection et l'unité réceptrice (30).

8. Dispositif selon l'une des revendications 1 à 7, **caractérisé en ce qu'**au moins un élément optique de réfraction ou de réflexion est agencé dan le chemin optique entre l'unité de rayonnement (26, 28) et l'unité réceptrice (30).
